# EUROPEAN PATENT SPECIFICATION

(11) **EP 1 553 328 B1**
(45) Date of publication and mention of the grant of the patent: **04.04.2012**
(21) Application number: 03791279.7
(22) Date of filing: 26.08.2003
(51) Int. Cl.: F16H 25/24, F16H 25/22, F16H 57/04

(54) **BALL SCREW**
KUGELSPINDEL
VIS A BILLES

(30) Priority: 28.08.2002 JP 2002249581
(43) Date of publication of application: 13.07.2005
(73) Proprietor: THK CO., LTD., Shinagawa-ku, Tokyo 141-8503 (JP)
(72) Inventor: MICHIOKA, Hidekazu,c/o THK Co., Ltd., Tokyo 141-8503 (JP); YATSUSHIRO, Daisuke,c/o THK Co., Ltd., Tokyo 141-8503 (JP); YOSHINO, Masahiko,c/o THK Co., Ltd., Tokyo 141-8503 (JP)
(74) Representative: TBK
(86) International application number: PCT/JP2003/010736
(87) International publication number: WO 2004/020872

(56) References cited:
- EP-A1- 1 150 037
- DE-U1- 8 510 866
- GB-A- 2 218 757
- JP-A- 5 172 139
- JP-A- 10 205 605
- JP-A- 2000 145 917
- JP-A- 2000 161 462
- US-A- 3 669 460
- US-A- 4 274 294
- US-A- 5 769 543
- US-A1- 2002 056 330
- US-A1- 2002 056 330
- US-B1- 6 216 821

## Description

### Technical Field:

The present invention relates to a ball screw having a screw shaft and a nut member, in which seal members are provided at both axial ends of the nut member.

### Background Art:

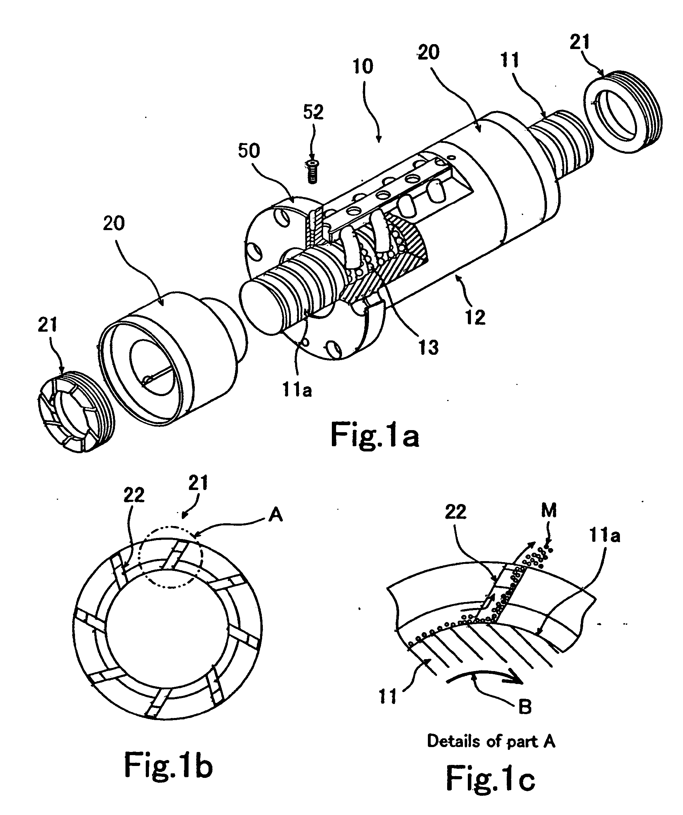

Fig. 1 is a diagram showing the structure of a ball screw of the type described above. Fig. 1a is an exploded perspective view showing the whole arrangement of the ball screw. Fig. 1b is a front view showing the arrangement of a wiper ring. Fig. 1c is a detailed view of a part A in Fig. 1b. The ball screw 10 has a screw shaft 11 having on the outer peripheral surface thereof a spiral ball rolling groove 11a along which balls (rolling elements) roll. A nut member 12 is relatively movably mounted on the screw shaft 11. The nut member 12 has on the inner peripheral surface thereof a ball recirculation passage (not shown) including a ball rolling groove (not shown) that faces opposite the ball rolling groove 11a. A plurality of balls (rolling elements) 13 are arranged and accommodated in the ball recirculation passage. The balls 13 recirculate in response to the relative movement (rotation) of the screw shaft 11 and the nut member 12. Lubricant supply devices 20 are fitted to both longitudinal ends of the nut member 12 to supply lubricant to the ball rolling groove 11a of the screw shaft 11.

When the screw shaft 11 is rotated, the balls 13 roll and recirculate between the ball rolling groove 11a of the screw shaft 11 and the ball rolling groove of the nut member 12 and through the ball recirculation passage in the nut member 12. It should be noted that the balls 13 similarly roll and recirculate when the nut member 12 is rotated, while the screw shaft 11 is fixed as a stationary member.

The lubricant supply devices 20 rotate relative to the screw shaft 11 in the same way as the nut member 12 to apply lubricant to the ball rolling groove 11a of the screw shaft 11. The lubricant supply devices 20 each comprise a lubricant supply mechanism (described later) disposed closer to the nut member 12 and a wiper ring (seal member) 21 disposed outside the lubricant supply mechanism.

As shown in Fig. 1b, the wiper ring 21 has slits 22 tilted to prevent external contamination such as dust particles from entering the lubricant to be stored in the lubricant supply mechanism of the lubricant supply device 20. By the action of lips of the slits 22, as shown in Fig. 1c, contamination M in the ball rolling groove 11a of the screw shaft 11 is discharged to the outside. It should be noted that the arrow B indicates the rotation direction of the screw shaft 11.

As a method of preventing the lubricant from being discharged to the outside, it is conceivable to fit another wiper ring having slits 22 tilted in the opposite direction to that of the slits 22 in the wiper ring 21. That is, a lubricant supply device can be conceived in which a lubricant supply mechanism is disposed outside the nut member 12, and a first wiper ring having slits 22 tilted in the opposite direction is provided outside the lubricant supply mechanism. Further, a second wiper ring 21 as shown in Fig. 1 is provided outside the first wiper ring. However, because the wiper ring 21 has a bias cut, the lubricant undesirably leaks therethrough. In addition, the wiper ring 21 has the function of scraping out contamination M from the ball rolling groove 11a toward the outer periphery. Therefore, the lubricant supply device cannot perform the desired action when the lubricant is returned to the ball rolling groove 11a. Document EP 1 150 037 A1 discloses a ball screw having the features of the preamble of claim 1.

Document US 2002/0056330 A1 discloses a further ball screw. This ball screw comprises an application member having a tongue portion for a contact with a surface of a ball rolling groove. The application member and the tongue portion are made of a fiber-entangled body such as a felt having a low porosity to soak and store the lubricant and to lubricate the groove surface.

The present invention was made in view of the above-described circumstances. An object of the present invention is to provide a ball screw having a lubricant supply device arranged to prevent the lubricant in the ball rolling groove from leaking to the outside.

### Disclosure of the Invention:

The above-described object is solved by a ball screw comprising the features of claim 1. Further developments are stated in the dependent claims.

In claim 1, the present invention provides a ball screw including a screw shaft having a ball rolling groove on the outer periphery thereof and a plurality of balls rollable along the ball rolling groove. A nut member is engaged with the screw shaft through the balls. A lubricant supply mechanism is provided at each axial end of the nut member. A seal member is provided outside the lubricant supply mechanism. In the ball screw, the lubricant supply mechanism has an application member whose distal end is in, sliding contact. with the ball rolling groove, the application member being impregnable with lubricant, so that lubricant is supplied to the ball rolling groove through the application member. An oil lip member is provided in the vicinity of the application member with a predetermined gap provided between itself and the application member in a direction of the ball rolling groove. The distal end of the oil lip member is in sliding contact with the surface of the ball rolling groove to scrape the lubricant off the ball rolling groove. The oil lip member is of a material not impregnable with the lubricant.

Thus, an oil lip member is provided in the vicinity of the application member with a predetermined gap provided between itself and the application member so that the distal end of the oil lip member is in sliding contact with the surface of the ball rolling groove. With this arrangement, lubricant supplied from the application member to the ball rolling groove is scraped off with the oil lip member and accumulated in the space between the application member and the oil lip member. Therefore, the lubricant is urged to return to the inside of the lubricant supply mechanism through the application member. Consequently, the distal end of the application member is always immersed in the lubricant, and a sufficient amount of lubricant is always ensured in the ball rolling groove. Moreover, no lubricant is wastefully discharged to the outside. Accordingly, the consumption of lubricant is minimized.

In addition, the oil lip member is secured to a mount portion of the application member of the lubricant supply mechanism through a leaf spring so that the distal end of the oil lip member is always kept in sliding contact with the surface of the ball rolling groove by the elastic force of the leaf spring.

Thus, the oil lip member is secured to a mount portion of the application member of the lubricant supply mechanism through a leaf spring so that the distal end of the oil lip member is always kept in sliding contact with the surface of the ball rolling groove by the elastic force of the leaf spring. Therefore, the distal end of the oil lip member is always kept in sliding contact with the surface of the ball rolling groove. Consequently, an excess of lubricant in the ball rolling groove is scraped off and accumulated in the space between the application member and the oil lip member. Accordingly, the above-described action further improves.

In addition, the oil lip member has a sliding contact portion that comes in sliding contact with the surface of the ball rolling groove. The sliding contact portion is made of a wear-resistant resin material. The sliding contact portion is integrally provided at the distal end of an oil lip body made of an elastic material. The oil lip member is secured to a mount portion of the application member of the lubricant supply mechanism through a support member so that the distal end of the sliding contact portion is always in sliding contact with the surface of the ball rolling groove.

Thus, the oil lip member is arranged such that a sliding contact portion made of a wear-resistant resin material is integrally provided at the distal end of an oil lip body made of an elastic material. Accordingly, the whole sliding contact surface of the sliding contact portion is always kept in close contact with the surface of the ball rolling groove by the elastic force of the oil lip body during sliding thereon. The lubricant in the ball rolling groove is scraped off and accumulated in the space between the application member and the oil lip member. Therefore, the above-described action further improves.

In addition, the ball screw includes a screw shaft having a ball rolling groove on the outer periphery thereof and a plurality of balls rollable along the ball rolling groove. A nut member is engaged with the screw shaft through the balls. A lubricant supply mechanism supplies lubricant to the part of the ball rolling groove located in the nut member. A seal member is provided at each end of the nut member. In the ball screw, the seal member has an oil lip member whose distal end is always in sliding contact with the surface of the ball rolling groove.

Thus, the seal member has an oil lip member whose distal end is always in sliding contact with the surface of the ball rolling groove. Therefore, the lubricant supplied to the surface of the ball rolling groove is scraped off with the oil lip member and prevented from leaking to the outside of the nut member. Consequently, a sufficient amount of lubricant is always ensured in the part of the ball rolling groove located in the nut member. Moreover, no lubricant is wastefully discharged to the outside. Accordingly, the consumption of lubricant is minimized.

In an unclaimed example, the oil lip member has a sliding contact portion that comes in sliding contact with the surface of the ball rolling groove. The sliding contact portion is made of a wear-resistant resin material. The sliding contact portion is integrally provided at the distal end of an oil lip body made of an elastic material.

Thus, the oil lip member is arranged such that a sliding contact portion made of a wear-resistant resin material is integrally provided at the distal end of an oil lip body made of an elastic material. Accordingly, the whole sliding contact surface of the sliding contact portion is always kept in close contact with the surface of the ball rolling groove by the elastic force of the oil lip body during sliding thereon. Therefore, the action of scraping the lubricant off the ball rolling groove improves. Accordingly, the above-described action of the invention recited in claim 3 further improves.

### Brief Description of the Drawings:

Fig. 1 is a diagram showing the structure of a ball screw, in which: Fig. 1a is an exploded perspective view showing the whole arrangement of the ball screw; Fig. 1b is a front view showing the arrangement of a wiper ring; and Fig. 1c is a detailed view of a part A in Fig. 1b.
Fig. 2 is a diagram showing the positional relationship between an application member of a lubricant supply mechanism and an oil lip member in the ball screw according to the present invention.
Fig. 3 is a perspective view showing the arrangement of the oil lip member.
Fig. 4 is a diagram for explaining the operation of the application member and the oil lip member.
Fig. 5 is an exploded perspective view showing a structural example of a lubricant supply device of the ball screw according to the present invention.
Fig. 6 is a sectional view of the lubricant supply device of the ball screw according to the present invention taken in a direction perpendicular to the axis thereof.
Fig. 7 is a diagram showing an end portion of a nut member in another structural example of the ball screw according to the present invention.
Fig. 8 is a diagram showing the arrangement of a seal member of the ball screw according to the present invention, in which: Fig. 8a is a side view; Fig. 8b is a plan view; and Fig. 8c is a side view of an oil lip member.
Fig. 9 is a side view showing the arrangement of the seal member of the ball screw according to the present invention.

### Best Mode for Carrying Out the Invention:

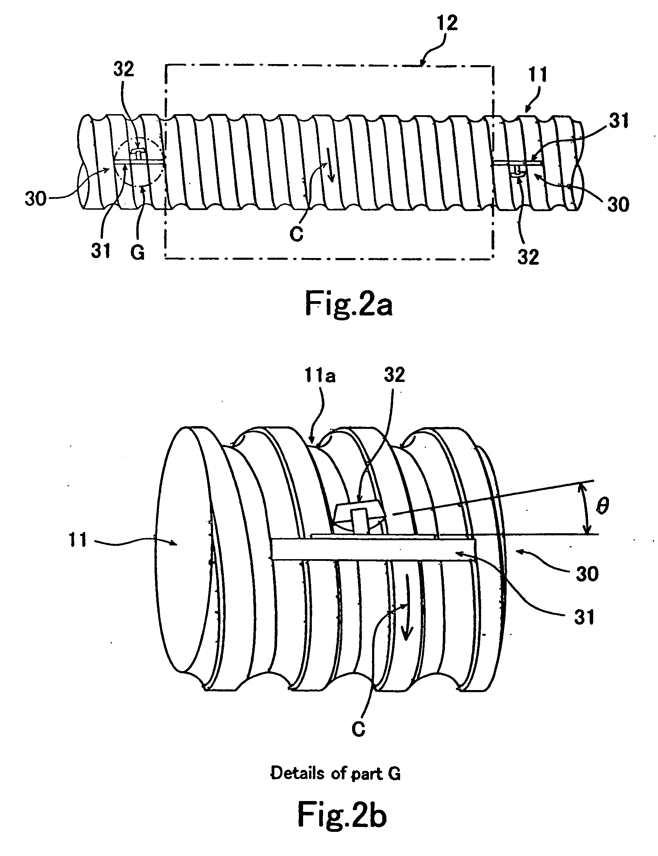

An embodiment of the present invention will be described below with reference to the accompanying drawings. Fig. 2 is a diagram showing the positional relationship between an application member of a lubricant supply mechanism and an oil lip member in a ball screw according to the present invention. As illustrated in the figure, a lubricant supply mechanism 30 has a plate-shaped application member 31 with a tongue portion (described later) placed in sliding contact with a ball rolling groove 11a provided on the outer periphery of a screw shaft 11. The application member 31 is positioned approximately parallel to the axial direction of the screw shaft 11. An oil lip member 32 is positioned in the vicinity of the application member 31 with a predetermined gap provided between itself and the application member 31 in a direction opposite to the rotation direction (direction indicated by the arrow C) of the screw shaft 11. The oil lip member 32 is installed at a predetermined lead angle θ with respect to the application member 31.

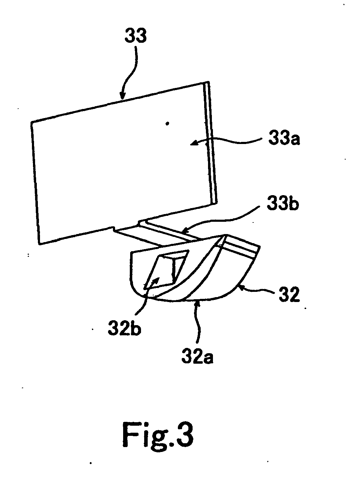

The application member 31 is made of a fiber-entangled material or the like, e.g. felt, which is suitable for supplying lubricant from the lubricant supply mechanism 30 at a predetermined feed rate, as will be described later. The oil lip member 32 is made of a resin material, e.g. an elastomer, which is a material exhibiting excellent sliding characteristics with respect to the surface of the ball rolling groove 11a. As shown in Fig. 3, the oil lip member 32 is secured to a bent support portion 33b extending from a base 33a of a leaf spring 33. The oil lip member 32 is installed so that a distal end portion 32a thereof is always kept in sliding contact with the ball rolling groove 11a by the elastic force of the support portion 33b.

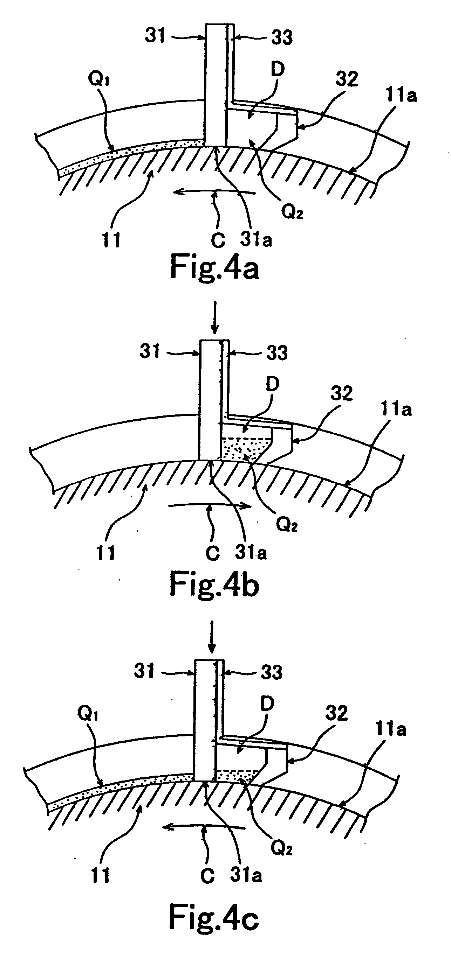

Fig. 4 is a diagram for explaining the operation of the application member 31 and the oil lip member 32. When the screw shaft 11 rotates in the direction indicated by the arrow C, lubricant Q₁ is applied to the surface of the ball rolling groove 11a from the application member 31. At the same time, lubricant Q₂ remaining on the surface of the ball rolling groove 11a is scraped off with the oil lip member 32 and accumulated in a space D between the application member 31 and the oil lip member 32. The accumulated lubricant is urged to return to the inside of the lubricant supply mechanism through the application member 31. Consequently, the distal end of the application member 31 is always immersed in the lubricant Q₂, and a sufficient amount of lubricant is always ensured in the ball rolling groove 11a. Moreover, no lubricant is wastefully discharged to the outside.

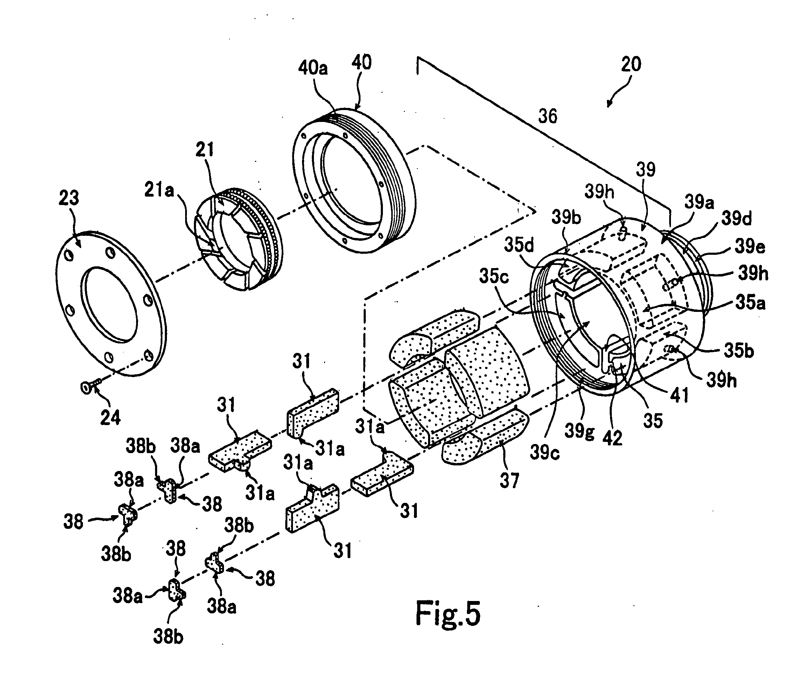

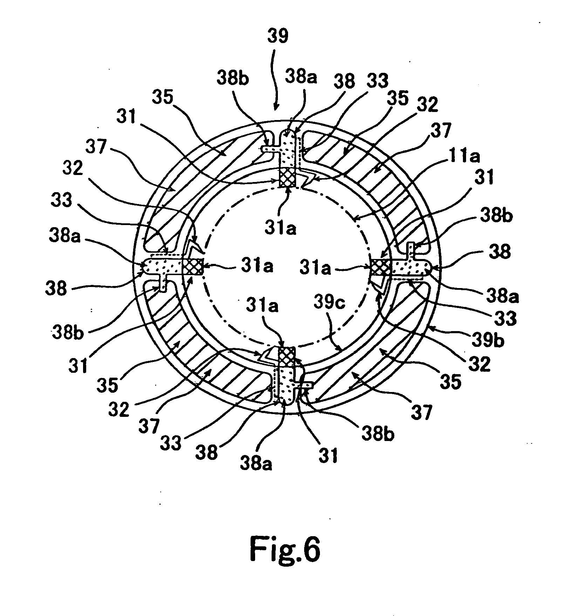

Figs. 5 and 6 are diagrams showing a structural example of a lubricant supply device of the ball screw according to the present invention. Fig. 5 is an exploded perspective view. Fig. 6 is a sectional view taken in a direction perpendicular to the axis. A lubricant supply device 20 includes four application members 31 having respective tongue portions 31a coming into contact with the ball rolling groove 11a (see Fig. 2) of the screw shaft 11. A casing 36 is formed with four lubricant accommodating chambers 35 that supply lubricant to the application members 31, respectively. Four lubricant occluding members 37 are filled in the lubricant accommodating chambers 35, respectively. The lubricant supply device 20 further includes relay members 38 as control means for controlling the amount of lubricant supplied from the lubricant occluding members 37 to the application members 31.

The casing 36 comprises a casing body 39 formed with a lubricant accommodating chamber 35 and a ring casing member 40 accommodating a wiper ring 21. The casing body 39 is made of a resin material, for example. The casing body 39 has a disk-shaped base plate 39a, a circular cylindrical outer cylinder 39b extending from the outer periphery of the base plate 39a perpendicularly to the plane of the base plate 39a, and a circular cylindrical inner cylinder 39c provided inside the outer cylinder 39b. The lubricant accommodating chamber 35 is formed between the outer cylinder 39b and the inner cylinder 39c. The lubricant accommodating chamber 35 is formed cylindrically so as to loosely fit around the screw shaft 11, and circumferentially divided into four compartments 35a, 35b, 35c and 35d, which is the same number as that of threads of the screw shaft 11.

The casing body 39 has four slits 41 extending in the direction of the center line of the screw shaft 11. The slits 41 are circumferentially equally spaced in correspondence to the compartments 35a, 35b, 35c and 35d. As shown in Fig. 6, a leaf spring 33 equipped with an application member 31 and an oil lip member 32 is fitted into each of the slits 41. The distal end of each slit 41 is open. A cut portion 42 is formed in the vicinity of the open end of each slit 41. A relay member 38 is fitted into the cut portion 42. The outer cylinder 39b has an internal thread 39g formed on the inner periphery of the distal end portion thereof. The internal thread 39g is engageable with an external thread 40a of the ring casing member 40. The axial length of the inner cylinder 39c is shorter than the axial length of the outer cylinder 39b so that the ring casing member 40 can be fitted in the outer cylinder 39b.

The base plate 39a has a cylindrical head portion 39d projecting from the reverse side thereof to connect the lubricant supply device 20 to the nut member 12. The head portion 39d has a circumferentially extending groove 39e on the outer periphery thereof. The head portion 39d is fitted to a ring-shaped groove formed on a flange 50 (see Fig. 1). The lubricant supply device 20 is fitted to the nut member 12 by tightening a setscrew 52 engaged with the groove 39e of the head portion 39d. Next, a cover plate 23 is fitted to a side surface of the ring casing member 40 with screws 24.

The four circumferentially equally divided compartments 35a, 35b, 35c and 35d are filled with lubricant occluding members 37, respectively. The lubricant occluding members 37 are formed by using a fiber-entangled material, e.g. felt, having a high percentage of void to absorb and retain the lubricant. In this embodiment, rayon-mixed wool felt having a void percentage of 81% is used. It should be noted that the base plate 39a is provided with air holes 39h communicating with the compartments 35a, 35b, 35c and 35d, respectively.

The relay members 38 each comprise a body 38a disposed in a slit 41 so as to contact the associated application member 31. The bodies 38a of the relay members 38 are not in contact with the associated compartments 35a, 35b, 35c and 35d. Each relay member 38 further comprises an elongated portion 38b extending from the body 38a. The elongated portions 38b of the relay members 38 are in contact with the associated compartments 35a, 35b, 35c and 35d. The body 38a has a configuration matching the sectional configuration of the slit 41 so as to be fittable into the distal end of the slit 41. The elongated portion 38b extends from a central portion of the body 38a in a direction perpendicular to the body 38a to contact the associated lubricant occluding member 37. Each relay member 38 having a body 38a and an elongated portion 38b assumes an approximately T-shaped configuration. The elongated portion 38b fits into a cut portion 42 formed in a partition of the casing body 39.

Lubricant absorbed and retained by each lubricant occluding member 37 is supplied to the associated application member 31 successively through the elongated portion 38b and the body 38a of the relay member 38. A material suitable for the relay members 38 is a fiber-entangled material, e.g. felt, which can absorb and retain lubricant and has a percentage of void in the middle between those of the lubricant occluding members 37 and the application members 31. In this embodiment, wool felt is used.

The application members 31 for applying lubricant to the ball rolling groove 11a of the screw shaft 11 are formed in an approximately rectangular configuration and disposed in the respective slits 41 in such a manner as to be not in contact with the associated compartments 35a, 35b, 35c and 35d. The application members 31 are fitted into the four slits 41, respectively. The four application members 31 are each provided with one approximately rectangular tongue portion 31a that comes into contact with the ball rolling groove 11a of the screw shaft 11. The tongue portion 31a has been chamfered so as to be capable of contacting the ball rolling groove 11a having an arcuate sectional configuration.

A material suitable for the application members 31 is a fiber-entangled material, e.g. felt, which has a low percentage of void and can absorb and retain lubricant. In this embodiment, wool felt having a void percentage of 54% is used. The use of felt or the like that has a low percentage of void allows the application members 31 to retain a sufficient amount of lubricant to be applied and also permits the application members 31 to have a sufficient strength to withstand sliding contact with the ball rolling groove 11a.

The ring casing member 40 accommodates a wiper ring 21 that scrapes contamination off the surface of the ball rolling groove 11a of the screw shaft 11. The wiper ring 21 has a scraper surface 21a that comes into close contact with the surface of the ball rolling groove 11a of the screw shaft 11. The scraper surface 21a allows the interior of the nut member 12 to be sealed and makes it possible to prevent external contamination from entering the nut member 12 and also prevent the lubricant from leaking to the outside.

The lubricant occluding members 37 are accommodated in the compartments 35a, 35b, 35c and 35d, respectively, and the leaf springs 33 each equipped with an application member 21 and an oil lip member 32 as stated above are fitted into the slits 41, respectively. Consequently, the tongue portions 31a of the application members 31 and the oil lip members 32 project inwardly of the casing body 39. The relay members 38 are installed near the open ends of the slits 41. The body 38a of each relay member 38 is in contact with the associated application member 31, but not in contact with the lubricant occluding member 37. The elongated portion 38b of the relay member 38 is in contact with the associated lubricant occluding member 37. After the lubricant occluding members 37, the relay members 38 and the leaf springs 33 equipped with the respective application members 31 and oil lip members 32 have been installed in the casing body 39, the ring casing member 40 is mated with the casing body 39 through thread engagement. Thus, the interiors of the lubricant accommodating chambers 35 are sealed.

When the lubricant supply device 20 is fitted to the nut member 12, the tongue portions 31a of the application members 31 and the oil lip members 32 supported by the leaf springs 33, which project inwardly of the casing body 39, are pressed against the ball rolling groove 11a of the screw shaft 11. The lubricant is always supplied to fill the distal end of each tongue portion 31a by capillarity. At the same time, it is retained by surface tension. Therefore, the lubricant cannot overflow. When the screw shaft 11 rotates relative to the nut member 12, as shown in Fig. 4, lubricant Q₁ from the tongue portion 31a of the application member 31 is applied to the surface of the ball rolling groove 11a. At the same time, lubricant Q₂ remaining on the surface of the ball rolling groove 11a is scraped off with the oil lip member 32 and accumulated in a space D between the application member 31 and the oil lip member 32. The lubricant Q₂ accumulated in the space D in this way is conveyed from the tongue portion 31a through the application member 31 and stored in the lubricant supply device 20.

Meanwhile, each lubricant occluding member 37 retains a large amount of lubricant. Therefore, as the amount of lubricant impregnated in the application member 31 gradually decreases, the lubricant impregnated in the lubricant occluding member 37 is supplied to the application member 31 through the relay member 38 by capillarity. Consequently, the application member 31 is always impregnated with an approximately constant amount of lubricant. Thus, it becomes possible to stabilize the amount of lubricant applied to the screw shaft 11 from the application member 31. Utilization of capillarity enables a minimum necessary amount of lubricant to be continuously supplied to the ball rolling groove 11a with reliability. At this time, the compartments 35a, 35b, 35c and 35d are in communication with atmospheric air through the air holes 39h and hence maintained at atmospheric pressure.

The amount of lubricant supplied from the lubricant occluding member 37 to the application member 31 is controlled by the relay member 38. The amount of lubricant supplied can be appropriately controlled by selecting an optimum configuration for the elongated portion 38b of the relay member 38 and an optimum area of contact between the elongated portion 38b and the lubricant occluding member 37. When most of the lubricant impregnated in the lubricant occluding member 37 has been consumed, lubricant is supplied to the lubricant occluding member 37 from the outside through a supply hole (not shown) provided in the casing body 39.

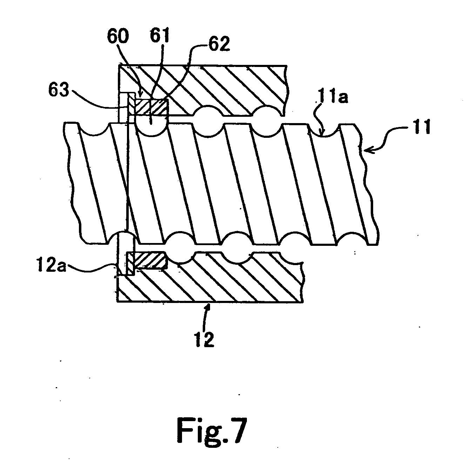

Fig. 7 is a diagram showing an end portion of a nut member in another structural example of the ball screw according to the present invention. As illustrated in the figure, the ball screw has a seal member 60 (arranged as detailed later) provided in each end portion of the nut member 12 (only one end portion thereof is shown in the figure). The seal member 60 is inserted into a seal fitting stepped portion 12a formed in the end portion of the nut member 12 and secured with a retaining ring 63 that is press-fit into the seal fitting stepped portion 12a. It should be noted that a lubricant supply mechanism for supplying lubricant to the part of the ball rolling groove 11a located in the nut member 12 may be arranged as shown in Fig. 5. Alternatively, the lubricant supply mechanism may be formed from a lubricant supply hole that is provided in a predetermined portion (e.g. an end portion) of the nut member 12.

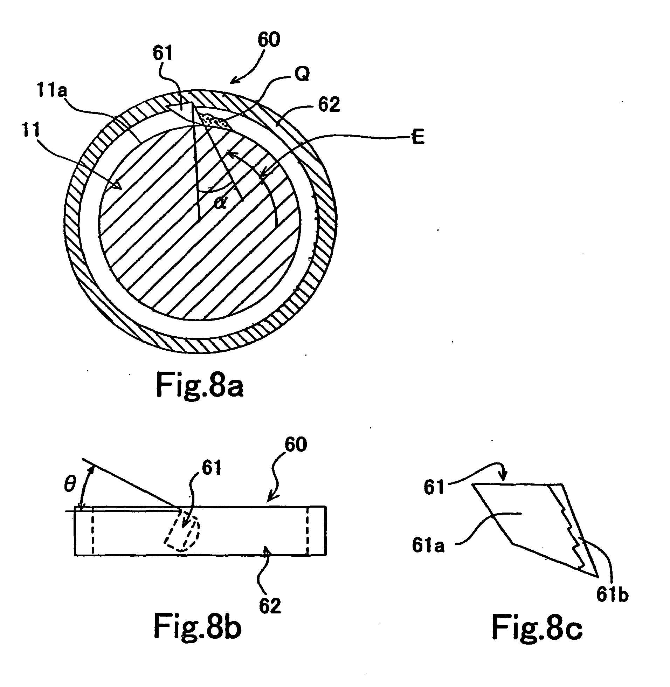

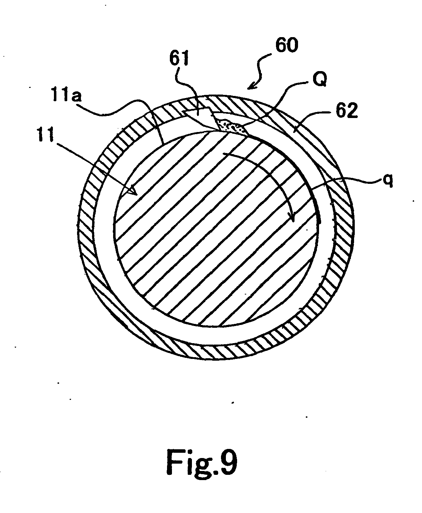

Fig. 8 is a diagram showing the arrangement of the seal member 60. Fig. 8a is a side view. Fig. 8b is a plan view. Fig. 8c is a side view of an oil lip member 61. As illustrated in the figures, the seal member 60 has an oil lip member 61 secured to the inner peripheral surface of a metal ring 62 at a predetermined angle α of tilt with respect to the radial direction. When the screw shaft 11 rotates as indicated by the arrow E, lubricant Q, e.g. grease, applied to the surface of the ball rolling groove 11a is scraped off with the oil lip member 61 and accumulated at the front side of the oil lip member 61. Accordingly, the lubricant Q cannot leak to the rear side of the oil lip member 61. That is, no lubricant Q can leak to the outside of the nut member 12. When the screw shaft 11 rotates in the direction indicated by the arrow F in Fig. 9 (direction opposite to the arrow E), the lubricant Q accumulated at the front side of the oil lip member 61 is applied to the surface of the ball rolling groove 11a in the form of a thin film q.

As shown in Fig. 8c, the oil lip member 61 comprises an oil lip body 61a made of an elastic material, e.g. a rubber material, and a sliding contact portion 61b integrally contact-bonded to the distal end and front of the oil lip body 61a. The sliding contact portion 61b is made of a wear-resistant resin material, e.g. Teflon resin. The sliding contact portion 61b of the oil lip member 61 is, as shown in Fig. 6, shaped (arcuate configuration) so as to come into close contact with the surface of the ball rolling groove 11a of the screw shaft 11. Thus, the oil lip member 61 has an arrangement in which the sliding contact portion 61b made of a wear-resistant resin is integrally formed on the oil lip body 61a made of an elastic material. With this arrangement, the whole sliding contact surface of the sliding contact portion 61b can be brought into contact with the ball rolling groove 11a smoothly in the state of being pressed against it at a uniform pressure at all times by the elastic force of the oil lip body 61a. Thus, the lubricant Q, e.g. grease, applied to the ball rolling groove 11a can be efficiently scraped off with the sliding contact portion 61b.

It should be noted that θ in Fig. 8c represents a predetermined lead angle. The lead angle θ is set so that the front surface of the sliding contact portion 61b of the oil lip member 61 is at right angles to the groove direction of the ball rolling groove 11a. This arrangement improves the retention of the scraped lubricant Q. In addition, because the oil lip member 61 retains the lubricant Q scraped off the ball rolling groove 11a, the oil film forming capability increases, so that a favorable lubrication state can be maintained. Further, because the sliding contact portion 61b is made of a wear-resistant resin material, e.g. Teflon resin, heat generation and wear can be minimized.

A seal member 60 having the oil lip member 61 installed on the metal ring 62 at a predetermined lead angle θ as stated above is secured to each end of the nut member 12. With this arrangement, the lubricant applied to the surface of the part of the ball rolling groove 11a of the screw shaft 11 located in the nut member 12 cannot leak to the outside of the nut member 12, but it is retained in the nut member 12. Thus, the surface of the part of the ball rolling groove 11a located in the nut member 12 is always coated with an appropriate amount of lubricant.

Further, the oil lip member 32 shown in Fig. 2 may be replaced with the oil lip member 61 arranged as shown in Fig. 8c, i.e. an oil lip member 61 having an arrangement in which the sliding contact portion 61b made of a wear-resistant resin material, e.g. Teflon resin, is integrally contact-bonded to the distal end and front of the oil lip body 61a made of an elastic material, e.g. a rubber material. That is, the oil lip member 61 may be installed near the application member 31 through a support member at a predetermined lead angle θ in place of the oil lip member 32 to constitute a ball screw. With such a ball screw structure, lubricant Q₁ is applied to the surface of the ball rolling groove 11a from the application member 31, and at the same time, lubricant Q₂ remaining on the surface of the ball rolling groove 11a is scraped off with the oil lip member 61 and accumulated in a space D between the application member 31 and the oil lip member 61, as has been stated in connection with Fig. 4. The accumulated lubricant is urged to return to the inside of the lubricant supply mechanism through the application member 31. Consequently, the distal end of the application member 31 is always immersed in the lubricant Q₂, and a sufficient amount of lubricant is always ensured in the ball rolling groove 11a. Moreover, no lubricant is wastefully discharged to the outside.

Although some embodiments of the present invention have been described above, the present invention is not limited to the foregoing embodiments but can be modified in a variety of ways without departing from the appended claims and the scope of the technical idea described in the specification and the accompanying drawings. It should be noted that any shape, structure or material that offers the operation/working-effect of the invention in this application is within the scope of the technical idea of the invention in this application even if it is not directly mentioned in the specification or the drawings.

### Industrial Applicability:

As has been stated above, according to the invention recited in claim 1, the distal end of the application member is always immersed in the lubricant, and a sufficient amount of lubricant is always ensured in the ball rolling groove. Moreover, no lubricant is wastefully discharged to the outside. Accordingly, the consumption of lubricant is minimized.

According to the invention recited in claim 2, the distal end of the oil lip member is always in sliding contact with the surface of the ball rolling groove. An excess of lubricant in the ball rolling groove is scraped off and accumulated in the space between the application member and the oil lip member. Therefore, a sufficient amount of lubricant is always ensured in the ball rolling groove in the invention recited in claim 1. No lubricant is wastefully discharged to the outside. Accordingly, the consumption of lubricant is minimized.

According to the invention recited in claim 3, the sliding contact surface of the sliding contact portion of the oil lip member is always kept in close contact with the surface of the ball rolling groove during sliding thereon. Accordingly, the lubricant in the ball rolling groove is scraped off and accumulated in the space between the application member and the oil lip member. Therefore, the above-described action of the invention recited in claim 1 further improves.

The lubricant supplied to the surface of the ball rolling groove is scraped off with the oil lip member and accumulated in the nut member. Therefore, a sufficient amount of lubricant is always ensured in the part of the ball rolling groove located in the nut member. Moreover, no lubricant is wastefully discharged to the outside. Accordingly, the consumption of lubricant is minimized.

The distal end of the oil lip member is always kept in close contact with the surface of the ball rolling groove by the elastic force of the oil lip body during sliding thereon. Therefore, the action of scraping the lubricant off the ball rolling groove improves. Accordingly, the above-described effect of minimized consumption of lubricant further improves.

## Claims

1. A ball screw comprising:
a screw shaft (11) having a ball rolling groove (11a) on an outer periphery thereof;
a plurality of balls (13) rollable along said ball rolling groove (11a);
a nut member (12) engaged with said screw shaft (11) through said balls;
a lubricant supply mechanism (30) provided at each axial end of said nut member (12); and
a seal member (21; 60) provided outside said lubricant supply mechanism (30);
**characterized in that**
said lubricant supply mechanism (30) has an application member (31) whose distal end is in sliding contact with said ball rolling groove (11a), said application member (31) being impregnable with lubricant (Q), so that the lubricant (Q) is supplied to said ball rolling groove (11a) through said application member (31), and
wherein an oil lip member (32; 61) is provided in a vicinity of said application member (31) with a predetermined gap (D) provided between itself and said application member (31) in a direction of said ball rolling groove (11a), said oil lip member (32; 61) having a distal end placed in sliding contact with a surface of said ball rolling groove (11a) to scrape the lubricant (Q) off said ball rolling groove (11a), and said oil lip member (32; 61) being made of a material that is not impregnable with the lubricant (Q).

2. A ball screw according to claim 1, wherein said oil lip member (32) is secured to a mount portion of the application member (31) of said lubricant supply mechanism (30) through a leaf spring (33) so that the distal end of said oil lip member (32) is always kept in sliding contact with the surface of said ball rolling groove (11a) by elastic force of said leaf spring (33).

3. A ball screw according to claim 1, wherein said oil lip member (61) has a sliding contact portion (61b) that comes in sliding contact with the surface of said ball rolling groove (11a), said sliding contact portion (61b) being made of a wear-resistant resin material, and said sliding contact portion (61b) being integrally provided at a distal end of an oil lip body (61a) made of an elastic material,
said oil lip member (61) being secured to a mount portion of the application member (31) of said lubricant supply mechanism (30) through a support member so that a distal end of said sliding contact portion (61b) is always in sliding contact with the surface of said ball rolling groove (11a).

## Patentansprüche

1. Kugelspindel mit:
einer Spindelwelle (11) mit einer Kugelrollnut (11a) an ihrem Außenumfang;
einer Vielzahl an Kugeln (13), die entlang der Kugelrollnut (11a) rollfähig sind;
einem Mutterelement (12), das mit der Spindelwelle (11) durch die Kugeln in Eingriff steht;
einem Schmiermittelliefermechanismus (30), der an jedem axialen Ende des Mutterelements (12) vorgesehen ist; und
einem Abdichtelement (21; 60), das außerhalb des Schmiermittelliefermechanismus (30) vorgesehen ist;
**dadurch gekennzeichnet, dass**
der Schmiermittelliefermechanismus (30) ein Auftragselement (31) hat, dessen distales Ende in einem Gleitkontakt mit der Kugelrollnut (11a) steht, wobei das Auftragselement (31) mit Schmiermittel (Q) so imprägnierbar ist, dass das Schmiermittel (Q) zu der Kugelrollnut (11a) durch das Auftragselement (31) geliefert wird, und
wobei ein Öllippenelement (32; 61) in der Nähe des Auftragselements (31) mit einem vorbestimmten Zwischenraum (D) vorgesehen ist, der zwischen diesem selbst und dem Auftragselement (31) in einer Richtung der Kugelrollnut (11a) vorgesehen ist, wobei das Öllippenelement (32; 61) ein distales Ende hat, das in einem Gleitkontakt mit einer Fläche der Kugelrollnut (11a) angeordnet ist, um das Schmiermittel (Q) von der Kugelrollnut (11a) wegzukratzen, und wobei das Öllippenelement (32; 61) aus einem Material hergestellt ist, das nicht mit dem Schmiermittel (Q) imprägnierbar ist.

2. Kugelspindel gemäß Anspruch 1, wobei das Öllippenelement (32) an einem Halterungsabschnitt des Auftragselements (31) des Schmiermittelliefermechanismus (30) durch eine Blattfeder (33) so gesichert ist, dass das distale Ende des Öllippenelements (32) stets in Gleitkontakt mit der Fläche der Kugelrollnut (11a) durch eine elastische Kraft der Blattfeder (33) gehalten wird.

3. Kugelspindel gemäß Anspruch 1, wobei das Öllippenelement (61) einen Gleitkontaktabschnitt (61b) hat, der in Gleitkontakt mit der Fläche der Kugelrollnut (11a) gelangt, wobei der Gleitkontaktabschnitt (61b) aus einem verschleißfesten Harzmaterial hergestellt ist, und wobei der Gleitkontaktabschnitt (61b) an einem distalen Ende eines Öllippenkörpers (61a) einstückig vorgesehen ist, der aus einem elastischen Material hergestellt ist,
wobei das Öllippenelement (61) an einem Halterungsabschnitt des Auftragselements (31) des Schmiermittelliefermechanismus (30) durch ein Stützelement so gesichert ist, dass ein distales Ende des Gleitkontaktabschnitts (61b) stets in Gleitkontakt mit der Fläche der Kugelrollnut (11a) ist.

## Revendications

1. Vis sphérique comprenant :
un arbre (11) de vis ayant une rainure (11a) de roulement à billes sur sa périphérie extérieure ;
une pluralité de billes (13) enroulables le long de ladite rainure (11a) de roulement à billes ;
un élément d'écrou (12) engagé avec ledit arbre (11) de vis à travers lesdites billes ;
un mécanisme (30) d'alimentation en lubrifiant prévu à chaque extrémité axiale dudit élément d'écrou (12) ; et
un élément d'étanchéité (21 ; 60) prévu à l'extérieur dudit mécanisme (30) d'alimentation en lubrifiant ;
**caractérisée en ce que**
ledit mécanisme (30) d'alimentation en lubrifiant possède un élément d'application (31) dont l'extrémité distale est en contact glissant avec ladite rainure (11a) de roulement à billes, ledit élément d'application (31) pouvant être imprégné avec un lubrifiant (Q), de sorte que le lubrifiant (Q) soit fourni à ladite rainure (11a) de roulement à billes à travers ledit élément d'application (31), et
où un élément de lèvre d'huile (32 ; 61) est prévu à proximité dudit élément d'application (31) avec un écart prédéterminé (D) prévu entre l'élément de lèvre d'huile (32 ; 61) et ledit élément d'application (31) dans une direction de ladite rainure (11a) de roulement à billes, ledit élément de lèvre d'huile (32 ; 61) ayant une extrémité distale placée en contact glissant avec une surface de ladite rainure (11a) de roulement à billes pour racler le lubrifiant (Q) de ladite rainure (11a) de roulement à billes, et ledit élément de lèvre d'huile (32 ; 61) étant constitué d'un matériau qui n'est pas imprenable avec le lubrifiant (Q).

2. Vis sphérique selon la revendication 1, dans laquelle ledit élément de lèvre d'huile (32) est fixé à une partie de montage de l'élément d'application (31) dudit mécanisme (30) d'alimentation en lubrifiant à travers un ressort à lames (33) de sorte que l'extrémité distale dudit élément de lèvre d'huile (32) soit toujours maintenue en contact glissant avec la surface de ladite rainure (11a) de roulement à billes par une force élastique dudit ressort à lames (33).

3. Vis sphérique selon la revendication 1, dans laquelle ledit élément de lèvre d'huile (61) possède une partie (61b) de contact glissant qui entre en contact glissant avec la surface de ladite rainure (11a) de roulement à billes, ladite partie (61b) de contact glissant étant constituée d'un matériau à base de résine résistant à l'usure, et ladite partie (61b) de contact glissant étant intégralement prévue au niveau d'une extrémité distale d'un corps de lèvre d'huile (61a) réalisé à partir d'un matériau élastique,
ledit élément de lèvre d'huile (61) étant fixé à une partie de montage de l'élément d'application (31) dudit mécanisme d'alimentation en lubrifiant (30) à travers un élément de support de sorte qu'une extrémité distale de ladite partie de contact coulissant (61b) soit toujours en contact glissant avec la surface de ladite rainure (11a) de roulement à billes.
